# EUROPÄISCHE PATENTSCHRIFT

(11) **EP 0 842 559 B1**
(45) Veröffentlichungstag und Bekanntmachung des Hinweises auf die Patenterteilung: **14.04.1999**
(21) Anmeldenummer: 96923847.6
(22) Anmeldetag: 15.07.1996
(51) Int. Cl.: H02K 9/08, H02K 9/24

(54) **VERFAHREN UND VORRICHTUNG ZUM SCHNELLEN DRUCKABBAU IN EINER ANLAGE, INSBESONDERE BEI EINEM WASSERSTOFFGEKÜHLTEN GENERATOR**
PROCESS AND DEVICE FOR QUICKLY REDUCING PRESSURE IN AN INSTALLATION, IN PARTICULAR A HYDROGEN-COOLED GENERATOR
PROCEDE ET DISPOSITIF POUR REDUIRE RAPIDEMENT LA PRESSION DANS UNE INSTALLATION, NOTAMMENT UN GENERATEUR REFROIDI A L'HYDROGENE

(30) Priorität: 31.07.1995 DE 19528090
(43) Veröffentlichungstag der Anmeldung: 20.05.1998
(73) Patentinhaber: SIEMENS AKTIENGESELLSCHAFT, 80333 München (DE)
(72) Erfinder: KRÜTZFELDT, Joachim, D-45481 Mülheim (DE); VON MUSIL, Rudolf, D-46147 Oberhausen (DE)
(86) Internationale Anmeldenummer: DE9601284
(87) Internationale Veröffentlichungsnummer: WO9705686

(56) Entgegenhaltungen:
- EP-A- 0 080 299
- WO-A-94/10739
- DE-B- 1 038 173
- PATENT ABSTRACTS OF JAPAN vol. 14, no. 312 (E-948), 5.Juli 1990 & JP,A,02 101943 (TOSHIBA ), 13.April 1990,

## Beschreibung

Die vorliegende Erfindung betrifft ein Verfahren und eine Vorrichtung zum schnellen Druckabbau in einer Anlage mit mindestens einem ersten und einem zweiten Gehäuseteil, wobei der erste Gehäuseteil im Normalzustand eine Wasserstoffatmosphäre unter Überdruck enthält, die durch eine Wasserstoffdichtung von dem Inneren des zweiten Gehäuseteils getrennt ist, wobei bei Versagen der Wasserstoffdichtung der Überdruck an Wasserstoff über eine Schnellentleerungsleitung abgelassen wird. Hauptanwendungsgebiet der Erfindung, auf das diese jedoch nicht beschränkt ist, sind wasserstoffgekühlte Generatoren, deren Wellen durch verschiedene Dichtungen und Gehäuseteile geführt werden, wobei der sichere Einschluß des unter Überdruck stehenden Wasserstoffes im Generatorgehäuse sichergestellt werden muß. Bei Leckagen von Wasserstoff kann sich in Verbindung mit Luft das hochexplosive Knallgas bilden, was unter allen Umständen auch bei Betriebsstörungen verhindert werden soll.

Bei einem typischen wasserstoffgekühlten Generator nach dem Stand der Technik, beispielsweise der GB-PS 760,781 oder dem Artikel "A Study on Thermal Behavior of Large Seal-Ring" von T. Suganami, T. Masuda, N. Oishi und T. Shimazu in Journal of Lubrication Technology, Oct. 1982, VOL 104/449, wird die Generatorwelle durch eine Labyrinthdichtung in eine Vorkammer, dann durch eine Wasserstoffdichtung in einen sogenannten Lagerraum und von dort nach außen in die Maschinenhalle, z.B. zu einer Turbine oder einem Getriebe geführt. Die Abdichtung zwischen Lagerraum und Maschinenhalle erfolgt üblicherweise ebenfalls über eine Labyrinthdichtung. Labyrinthdichtungen sind nicht vollständig gasdicht, sondern wirken nur wie ein starkes Drosselventil, so daß entlang dieser Dichtungen Wasserstoff entweichen kann. In der Vorkammer herrscht daher im Normalzustand der gleiche Druck wie im Generatorgehäuse. Im Lagerraum hingegen, der durch eine Wasserstoffdichtung mit praktisch vollständiger Dichtfunktion gegenüber der Vorkammer verschlossen ist, befindet sich im wesentlichen normale Raumluft. Sie wird mittels einer Entlüftungspumpe unter einem geringen Unterdruck gehalten, so daß kleine, eventuell doch durch die Wasserstoffdichtung gelangende Mengen an Wasserstoff nicht durch die Labyrinthdichtung des Lagerraumes in die Maschinenhalle gelangen können, sondern abgesaugt und ins Freie abgegeben werden.

Aus der WO 94/10739 A1 ist es bekannt, im Falle des Versagens der Wasserstoffdichtung eine Schnellentleerungsleitung zu öffnen, durch die der Überdruck in der Vorkammer sehr schnell abgebaut werden kann. Allerdings handelt es sich doch um ein so großes Volumen, daß zumindest für eine gewisse Zeit Wasserstoff durch die schadhafte Wasserstoffdichtung in den Lagerraum strömen und von dort durch die Labyrinthdichtung in die Maschinenhalle gelangen kann. Dies kann durch die Entlüftungspumpe, die nur ein relativ geringes Volumen pro Zeiteinheit fördert, nicht verhindert werden. Es kann zwar durch Sperrluft in der äußeren Labyrinthdichtung ein Austreten von Wasserstoff in das Maschinenhaus verhindert werden, jedoch ist diese Maßnahme relativ aufwendig.

Aus der DE-AS 1 038 173 ist ebenfalls eine Einrichtung zur Sicherung der mittels wasserstoffgasgekühlten Generatoren bei Auftreten von unzulässigen Betriebszuständen angegeben. Die Einrichtung weist ein direkt am Generatorgehäuse vorgesehenes Schnellöffnungsventil großer Nennweite auf, durch das im Falle der Gefahr eine ins Freie führende Abgasleitung geöffnet wird. Bei dem Schnellöffnungsventil handelt es sich um ein Magnetventil oder ein durch ein Magnetventil betätigtes Ventil. Eine Auslösung des Magnetventils erfolgt durch Ansprechen eines Gasdruckschalters, der in den Wellenlagerräumen oder im Gehäuse des Generators eingebaut ist. Die Auslösung erfolgt bei einer erhöhten Wasserstoffkonzentration in den Wellenlagerräumen.

In dem Artikel "Erfahrungen mit wasserstoffgekühlten Turbogeneratoren" von Franz Bothur in "Elektrizitätswirtschaft", Heft 23, Seiten 877 bis 881, Dezember 1991, ist ein wasserstoffgekühlter Generator mit einer Öldichtung beschrieben. Die Öldichtung weist eine Ölablaufkammer auf, an die eine in die freie Atmosphäre führende Abgasleitung angeschlossen ist, welche allerdings nicht verhindert, daß eine große Menge Öl mit Wasserstoff in Berührung kommt und dadurch angereichert wird. Als zusätzliche Sicherheitsmaßnahme ist daher für Generatoren mit höheren Wasserstoffdrücken ein Druckbrecher vorgesehen, welcher unmittelbar vor dem Abheben der Wellendichtung öffnet und den größten Teil des Wasserstoffes ins Freie entläßt. Der Druckbrecher ist ein elektromagnetisch betätigtes Ventil mit großem Öffnungsquerschnitt.

Aufgabe der vorliegenden Erfindung ist es, bei der beschriebenen und ähnlichen Anlagekonstellation(en) ein Austreten von Wasserstoff in das Maschinenhaus mit einfachen Mitteln sicher zu vermeiden.

Zur Lösung dieser Aufgabe dient erfindungsgemäß eine Vorrichtung, bei der eine Schnellentleerungsleitung über eine Entlüftungsleitung mit dem Inneren des zweiten Gebäudeteils verbunden ist, insbesondere in der Schnellentleerungsleitung eine Strahlpumpe vorgesehen ist. Die auf ein Verfahren zur Schnellentleerung eines ersten Gehäuseteils gerichtete Aufgabe wird erfindungsgemäß gelöst durch ein Verfahren, bei dem durch die Strömung des Wasserstoffs in der Schnellentleerungsleitung über die Entlüftungsleitung Gas aus dem Inneren des zweiten Gebäudeteils abgesaugt wird. Vorteilhafte Ausgestaltungen sind in den jeweils abhängigen Ansprüchen beschrieben.

Die Erfindung geht davon aus, daß im Falle der Öffnung der Schnellentleerungsleitung der unter Überdruck stehende Wasserstoff mit großer Geschwindigkeit zu einem Auslaß, vorzugsweise über dem Dach des Maschinenhauses, strömt. Der Grundgedanke der vorliegenden Erfindung besteht darin, die Energie des ausströmenden Wasserstoffs aus dem ersten Gehäuseteil zur gleichzeitigen Absaugung des Gases im zweiten Gehäuseteil auszunutzen. Dies geschieht ohne mechanisch bewegliche Teile vorzugsweise durch eine in der Schnellentleerungsleitung angeordnete Strahlpumpe, an deren Saugleitung die Entlüftungsleitung des zweiten Gebäudeteiles angeschlossen ist.

Im Falle der Anwendung der Erfindung auf eine Generatoranlage ist typischerweise in der Entlüftungsleitung des zweiten Gebäudeteiles, d. h. des Lagerraumes eine Entlüftungspumpe angeordnet, welche einen geringen Unterdruck im Lagerraum aufrechterhält, wodurch geringe, durch die Wasserstoffdichtung tretende Wasserstoffmengen abgesaugt werden und nicht in das Maschinenhaus gelangen können. Diese Entlüftungspumpe ist jedoch nicht in der Lage, größere Mengen von Wasserstoff, die im Falle des Versagens der Wasserstoffdichtung in den Lagerraum eindringen, abzusaugen. Im Falle einer Schnellentleerung des ersten Gehäuseteiles, d. h. der Vorkammer, durch die Strahlpumpe, würde die Entlüftungspumpe in der Entlüftungsleitung eine wirksame Absaugung der Atmosphäre aus dem Inneren des Lagerraumes stark behindern. Deshalb wird eine Bypassleitung mit einem Rückschlagventil zur Überbrückung der Entlüftungspumpe eingesetzt. Das Rückschlagventil öffnet einen breiten Querschnitt zur Absaugung, wenn die Strahlpumpe bei einer Schnellentleerung aktiviert wird. Im Normalfall ist das Rückschlagventil durch die von der Entlüftungspumpe erzeugte Druckdifferenz geschlossen.

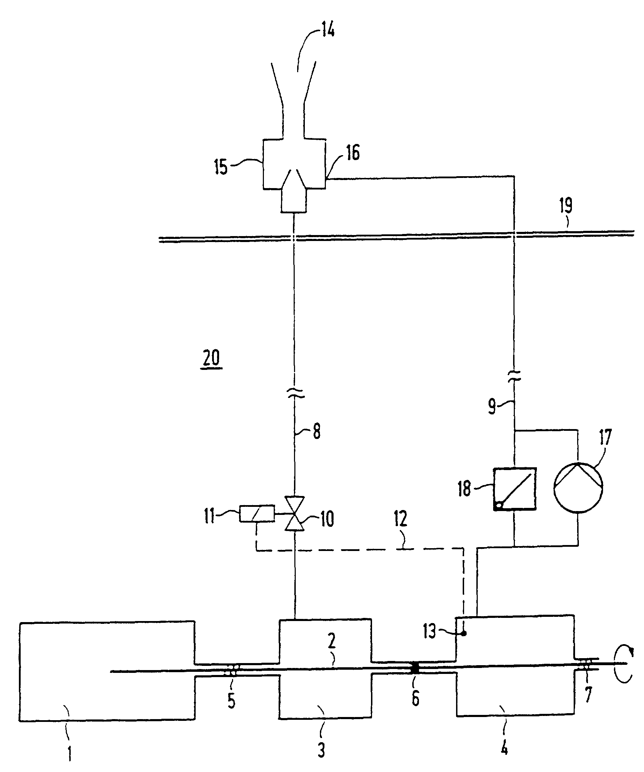

Weitere Einzelheiten und Vorteile der Erfindung werden im folgenden anhand der Zeichnung näher erläutert.

Die Zeichnung zeigt ein schematisches Ausführungsbeispiel der Erfindung, im vorliegenden Falle angewandt auf einen wasserstoffgekühlten Generator.

Der wasserstoffgekühlte Generator befindet sich in einem Generatorgehäuse 1, wobei die Generatorwelle 2 zunächst durch eine Labyrinthdichtung 5 in eine Vorkammer 3, dann durch eine Wasserstoffdichtung 6 in einen Lagerraum 4 und von dort durch eine weitere Labyrinthdichtung 7 in das Maschinenhaus 20 geführt ist.

Bei intakter Wasserstoffdichtung 6 ist der Druck im Generatorgehäuse 1 und in der Vorkammer 3 etwa gleich, während im Lagerraum 4 ein geringer Unterdruck herrscht. Dieser Unterdruck wird durch eine Entlüftungspumpe 17 erzeugt. Er bewirkt einen geringen Luftstrom vom Maschinenhaus 20 durch die Labyrinthdichtung 7, die Entlüftungsleitung 9 zu einem Auslaß 14, vorzugsweise über dem Dach 19 des Maschinenhauses 20.

An die Vorkammer 3 ist eine Schnellentleerungsleitung 8 angeschlossen, welche über ein im Normalbetrieb geschlossenes Ventil 10 geöffnet werden kann. Ein Sensor 13, z.B. im Lagerraum 4, überwacht die dortige Wasserstoffkonzentration, meldet diese über eine Meßleitung 12 an die Ventilsteuerung 11 weiter, welche bei Auftreten einer überhöhten Wasserstoffkonzentration im Lagerraum 4 das Ventil 10 öffnet. Dies tritt typischerweise dann auf, wenn die Wasserstoffdichtung 6 versagt. In diesem Falle strömt der unter Überdruck stehende Wasserstoff aus der Vorkammer 3 durch das Ventil 10, durch die Schnellentleerungsleitung 8 in eine Strahlpumpe 15 und von dort zum Wasserstoffauslaß 14. Der Wasserstoffstrahl erzeugt an der Saugleitung 16 der Strahlpumpe 15 einen erheblichen Unterdruck, welcher zur Absaugung der Atmosphäre im Lagerraum 4 führt. Da die Entlüftungspumpe 17 einen so großen Volumenstrom nicht durchlassen kann, öffnet sich das Rückschlagventil 18 in der die Entlüftungspumpe 17 überbrückenden Bypassleitung. Er erlaubt so eine schnelle Absaugung von eventuell in den Lagerraum 4 eingedrungenem Wasserstoff, wobei sichergestellt wird, daß dieser nicht durch die Labyrinthdichtung 7 in das Maschinenhaus 20 gelangen kann. Bevorzugt wird die gesamte Strahlpumpe 15 auf oder über dem Dach 19 des Maschinenhauses 20 angeordnet, wo typischerweise der entweichende Wasserstoff an die Umgebung abgegeben wird.

Durch die vorliegende Erfindung wird mit einfachen Mitteln, insbesondere ohne wesentliche mechanische Teile (außer einem Rückschlagventil) und ohne zusätzliche Energieversorgung, nur durch Ausnutzung der kinetischen Energie des durch die Schnellentleerungsleitung entweichenden Wasserstoffes auch eine schnelle Absaugung aus dem Lagerraum erreicht. Die Verbindung zwischen Schnellentleerungsleitung und Entlüftungsleitung bewirkt bei einer Schnellentleerung eine automatische Absaugung auch des zweiten Gehäuseteiles, so daß dort eingedrungener Wasserstoff nicht in das die Gehäuseteile umgebende Maschinenhaus gelangen kann. Diese Absaugung tritt automatisch bei jeder Schnellentleerung auf, ohne daß es zusätzlicher steuerungs- oder regelungstechnischer Maßnahmen bedarf, wodurch die Sicherheit der Gesamtanlage gegenüber dem Austreten von Wasserstoff in das Maschinenhaus wesentlich erhöht wird.

## Patentansprüche

1. Verfahren zum schnellen Druckabbau in einer Anlage mit mindestens einem ersten Gehäuseteil (3) und einem zweiten Gehäuseteil (4), wobei der erste Gehäuseteil (3) im Normalzustand Wasserstoff unter Überdruck enthält, die durch eine Wasserstoffdichtung (6) von dem Inneren des zweiten Gehäuseteils (4) getrennt ist, wobei bei Versagen der Wasserstoffdichtung (6) der Überdruck an Wasserstoff über eine Schnellentleerungsleitung (8) abgelassen wird, **dadurch gekennzeichnet**, daß über eine Entlüftungsleitung (9), die mit der Schnellentleerungsleitung (8) verbunden ist, Gas aus dem Inneren des zweiten Gehäuseteils (4) abgesaugt wird.

2. Verfahren nach Anspruch 1, **dadurch gekennzeichnet**, daß der Wasserstoff durch eine Strahlpumpe (15) in der Schnellentleerungsleitung (8) geleitet wird, wobei die Saugleitung (16) der Strahlpumpe (15) mit der Entlüftungsleitung (9) verbunden ist.

3. Verfahren nach Anspruch 1 oder 2, **dadurch gekennzeichnet**, daß eine in der Entlüftungsleitung (9) angeordnete Entlüftungspumpe (17) in Falle der Schnellentleerung durch eine Bypassleitung mit Rückschlagventil (18) umgangen wird.

4. Verfahren nach einem der vorhergehenden Ansprüche, **dadurch gekennzeichnet**, daß die Schnellentleerung in die Außenluft erfolgt, vorzugsweise oberhalb des Maschinenhauses (20), in dem sich die Gehäuseteile (1, 3, 4) befinden.

5. Vorrichtung zum schnellen Druckabbau in einer Anlage mit mindestens einem ersten Gehäuseteil (3) und einem zweiten Gehäuseteil (4), wobei der erste Gehäuseteil (3) in einem Normalzustand mit einer Wasserstoffatmosphäre mit Überdruck beaufschlagbar ist, und wobei eine Wasserstoffdichtung (6) vorgesehen ist, die den ersten Gehäuseteil (3) von dem Inneren des zweiten Gehäuseteiles (4) trennt, wobei bei Versagen der Wasserstoffdichtung (6) der Überdruck an Wasserstoff über eine Schnellentleerungsleitung (8) abbaubar ist, **dadurch gekennzeichnet**, daß eine Entlüftungsleitung (9) vorgesehen ist, die einerseits strömungstechnisch mit der Schnellentleerungsleitung (8) und andererseits mit dem Inneren des zweiten Gehäuseteils (4) verbunden ist.

6. Vorrichtung nach Anspruch 5, **dadurch gekennzeichnet**, daß in der Schnellentleerungsleitung (8) eine Strahlpumpe (15) vorhanden ist, deren Saugleitung (16) mit der Entlüftungsleitung (9) für den Innenraum des zweiten Gehäuseteiles (4) verbunden ist.

7. Vorrichtung nach Anspruch 5 oder 6, **dadurch gekennzeichnet**, daß in der Entlüftungsleitung (9) eine Entlüftungspumpe (17) angeordnet ist, und daß eine Bypassleitung mit Rückschlagventil (18) zur Umgehung der Entlüftungspumpe (17) im Falle der Schnellentleerung vorhanden ist.

8. Vorrichtung nach einem der Ansprüche 5 bis 7, **dadurch gekennzeichnet**, daß zumindest der Auslaß (14) der Strahlpumpe oberhalb des Daches (19) eines Maschinenhauses (20) angeordnet ist.

9. Vorrichtung nach Anspruch 8, **dadurch gekennzeichnet**, daß die Strahlpumpe (15) ganz oder teilweise oberhalb des Daches (19) angeordnet ist.

10. Vorrichtung nach einem der Ansprüche 5 bis 9, **dadurch gekennzeichnet**, daß mindestens ein Sensor (13) im zweiten Gehäuseteil (4) angeordnet ist, mit dem das Vorhandensein von Wasserstoff feststellbar ist und der über eine Meßleitung (20) mit der Ventilsteuerung (11) eines Ventils (10) zum Öffnen der Schnellentleerungsleitung (8) verbunden ist.

11. Vorrichtung nach einem der Ansprüche 5 bis 10, **dadurch gekennzeichnet**, daß die Anlage eine Generatoranlage ist mit einer durch den ersten Gehäuseteil (3) und den zweiten Gehäuseteil (4) verlaufenden Generatorwelle (2), wobei der erste Gehäuseteil (3) die Vorkammer eines wasserstoffgekühlten Generators ist, die vom Inneren des Generatorgehäuses (1) durch eine Labyrinthdichtung (5) getrennt ist.

12. Vorrichtung nach Anspruch 11, **dadurch gekennzeichnet**, daß der zweite Gehäuseteil (4) ein Lagerraum ist, dessen Inneres durch eine Wasserstoffdichtung (6) von der Vorkammer (3) und durch eine Labyrinthdichtung (7) von der Umgebung (20) getrennt ist.

## Claims

1. Method for quick pressure relief in a system having at least a first housing part (3) and a second housing part (4), it being the case that in the normal state the first housing part (3) contains hydrogen at overpressure which is separated from the interior of the second housing part (4) by a hydrogen seal (6), the overpressure of hydrogen being lowered via a quick discharge line (8) upon failure of the hydrogen seal (6), characterized in that gas is exhausted from the interior of the second housing part (4) via a bleed line (9) which is connected to the quick discharge line (8).

2. Method according to Claim 1, characterized in that the hydrogen is led through a jet pump (15) in the quick discharge line (8), the suction line (16) of the jet pump (15) being connected to the bleed line (9).

3. Method according to Claim 1 or 2, characterized in that in the case of quick discharge, a bleed pump (17) arranged in the bleed line (9) is bypassed by a bypass line having a non-return valve (18).

4. Method according to one of the preceding claims, characterized in that the quick discharge is performed into the outside air, preferably above the power house (20), in which the housing parts (1, 3, 4) are located.

5. Device for quick pressure relief in a system having at least a first housing part (3) and a second housing part (4), it being the case that in a normal state a hydrogen atmosphere at overpressure can be applied to the first housing part (3), and a hydrogen seal (6) being provided which separates the first housing part (3) from the interior of the second housing part (4), it being possible to relieve the overpressure of hydrogen via a quick discharge line (8) upon failure of the hydrogen seal (6), characterized in that a bleed line (9) is provided which, on the one hand, is connected in terms of flow engineering to the quick discharge line (8) and, on the other hand, is connected to the interior of the second housing part (4).

6. Device according to Claim 5, characterized in that present in the quick discharge line (8) is a jet pump (15) whose suction line (16) is connected to the bleed line (9) for the interior of the second housing part (4).

7. Device according to Claim 5 or 6, characterized in that a bleed pump (17) is arranged in the bleed line (9), and in that a bypass line having a non-return valve (18) is present for bypassing the bleed pump (17) in the case of quick discharge.

8. Device according to one of Claims 5 to 7, characterized in that at least the outlet (14) of the jet pump is arranged above the roof (19) of a power house (20).

9. Device according to Claim 8, characterized in that the jet pump (15) is arranged entirely or partly above the roof (19).

10. Device according to one of Claims 5 to 9, characterized in that there is arranged in the second housing part (4) at least one sensor (13) by means of which the presence of hydrogen can be determined and which is connected via a measuring line (12) to the valve controller (11) of a valve (10) for opening the quick discharge line (8).

11. Device according to one of Claims 5 to 10, characterized in that the system is a generator system having a generator shaft (2) extending through the first housing part (3) and the second housing part (4), the first housing part (3) being the prechamber of a hydrogen-cooled generator, which is separated from the interior of the generator housing (1) by a labyrinth seal (5).

12. Device according to Claim 11, characterized in that the second housing part (4) is a bearing compartment whose interior is separated from the prechamber (3) by a hydrogen seal (6) and from the environment (20) by a labyrinth seal (7).

## Revendications

1. Procédé pour réduire rapidement la pression dans une installation comprenant au moins une première partie (3) d'enveloppe et une seconde partie (4) d'enveloppe, la première partie (3) d'enveloppe contenant à l'état normal de l'hydrogène en surpression et étant séparée de l'intérieur de la seconde partie (4) d'enveloppe par un dispositif (6) d'étanchéité à l'hydrogène, la surpression d'hydrogène pouvant être évacuée en cas de défaillance du dispositif (6) d'étanchéité à l'hydrogène par un conduit (8) d'évacuation rapide, caractérisé en ce que du gaz est aspiré de l'intérieur de la seconde partie (4) d'enveloppe par un conduit (9) de mise à l'atmosphère, qui communique avec le conduit (8) d'évacuation rapide.

2. Procédé suivant la revendication 1, caractérisé en ce que l'hydrogène est envoyé par un injecteur (15) dans le conduit (8) d'évacuation rapide, le conduit (16) d'aspiration de l'éjecteur (15) communiquant avec le conduit (9) de mise à l'atmosphère.

3. Procédé suivant la revendication 1 ou 2, caractérisé en ce qu'une pompe (17) de mise à l'atmosphère, montée dans le conduit (9) de mise à l'atmosphère est, en cas d'évacuation rapide, contournée par un conduit de dérivation ayant un clapet (18) anti-retour.

4. Procédé suivant l'une des revendications précédentes, caractérisé en ce que l'évacuation rapide s'effectue à l'atmosphère extérieure, de préférence au-dessus du bâtiment (20) des machines dans lequel se trouvent les parties (1, 3, 4) d'enveloppe.

5. Dispositif de réduction rapide de la pression dans une installation, comprenant au moins une première partie (3) d'enveloppe et une seconde partie (4) d'enveloppe, la première partie (3) d'enveloppe pouvant être mise à l'état normal sous une surpression par une atmosphère d'hydrogène, et il est prévu un dispositif (6) d'étanchéité à l'hydrogène qui sépare la première partie (3) d'enveloppe de l'intérieur de la seconde partie (4) d'enveloppe, la surpression d'hydrogène pouvant, lors d'une défaillance du dispositif (6) d'étanchéité pour l'hydrogène, être réduite par un conduit (8) d'évacuation rapide, caractérisé en ce qu'il est prévu un conduit (9) de mise à l'atmosphère, qui communique d'une part avec le conduit (8) d'évacuation rapide et d'autre part avec l'intérieur de la seconde partie (4) d'enveloppe.

6. Dispositif suivant la revendication 5, caractérisé en ce qu'il est prévu dans le conduit (8) d'évacuation rapide un injecteur (15) dont le conduit (16) d'aspiration communique avec le conduit (9) de mise à l'atmosphère pour l'intérieur de la seconde partie (4) d'enveloppe.

7. Dispositif suivant la revendication 5 ou 6, caractérisé en ce qu'il est monté dans le conduit (9) de mise à l'atmosphère une pompe (17) de mise à l'atmosphère et en ce qu'il est prévu un conduit de dérivation à clapet (18) anti-retour pour contourner la pompe (17) de mise à l'atmosphère dans le cas d'une évacuation rapide.

8. Dispositif suivant l'une des revendications 5 à 7, caractérisé en ce qu'au moins la sortie (14) de l'injecteur est disposée au-dessus du toit (19) d'un bâtiment (20) de machines.

9. Dispositif suivant la revendication 85, caractérisé en ce que l'injecteur (15) est disposé en tout ou partie au-dessus du toit (19).

10. Dispositif suivant l'une des revendications 5 à 9, caractérisé en ce qu'il est monté dans la seconde partie (4) d'enveloppe un capteur (13) par lequel on peut déterminer la présence d'hydrogène et qui est relié par une ligne (20) de mesure à la commande (11) d'une vanne (10) permettant d'ouvrir le conduit (8) d'évacuation rapide.

11. Dispositif suivant l'une des revendications 5 à 10, caractérisé en ce que l'installation est une installation à génératrice ayant un arbre (2) de génératrice passant dans la première partie (3) d'enveloppe et dans la seconde partie (4) d'enveloppe, la première partie (3) d'enveloppe étant l'antichambre d'une génératrice refroidie par de l'hydrogène, antichambre qui est séparée de l'intérieur de l'enveloppe (1) de la génératrice par un dispositif d'étanchéité (5) à labyrinthe.

12. Dispositif suivant la revendication 11, caractérisé en ce que la seconde partie (4) d'enveloppe est une chambre de paliers, dont l'intérieur est séparé par un dispositif (6) d'étanchéité à l'hydrogène de l'antichambre (3) et par un dispositif (7) d'étanchéité à labyrinthe de l'atmosphère environnante (20).
